# EUROPEAN PATENT SPECIFICATION

(11) **EP 4 371 665 B1**
(45) Date of publication and mention of the grant of the patent: **11.03.2026**
(21) Application number: 22208101.0
(22) Date of filing: 17.11.2022
(51) Int. Cl.: B01L 3/00, G01N 15/14

(54) **A METHOD AND APPARAUS FOR MONITORING A MONITOR MATERIAL OF A PROCESS**
VERFAHREN UND VORRICHTUNG ZUR ÜBERWACHUNG EINES ÜBERWACHUNGSMATERIALS EINES PROZESSES
PROCÉDÉ ET APPAREIL POUR SURVEILLER UN MATÉRIAU DE SURVEILLANCE D'UN PROCESSUS

(43) Date of publication of application: 22.05.2024
(73) Proprietor: Imec VZW, 3001 Leuven (BE)
(72) Inventor: HENRY, Olivier, 1950 Kraainem (BE); STAKENBORG, Tim, 3001 Heverlee (BE); VAN ROY, Willem, 3360 Bierbeek (BE); PEUMANS, Peter, 1540 Herfelingen (BE)
(74) Representative: AWA Sweden AB

(56) References cited:
- WO-A1-2015/053393
- WO-A1-2021/252850
- WO-A1-2022/187608
- GB-A- 2 367 359
- US-A1- 2017 061 619
- US-A1- 2017 218 424
- US-A1- 2020 086 321

## Description

### Technical field

The present description relates to monitoring of a process, such as a manufacturing process, e.g., a process for manufacturing a biological material. In particular, the present description relates to a method and an apparatus for monitoring of biocontaminants for monitoring the process.

### Background

In many manufacturing processes, there is a need to avoid biocontamination. Such processes may be processes for manufacturing of biological material, such as manufacturing of therapeutic compound, such as antibodies, cells, or small molecules, where the manufacturing process needs to be strictly controlled to ensure that biocontaminants are not present in a product of the manufacturing process. In particular, pathogenic substances or microorganisms, such as fungi, yeasts, bacteria (including mycoplasma), and viruses, should be avoided in a final product. Such processes may also relate to manufacturing or handling of other material that may be subject to biocontamination, such as manufacturing process for ointments, food, etc.

A drug process development and manufacturing process may typically be set up to prevent or at least limit contaminants from contaminating the product. Nevertheless, bacteria might be present due to for example operator handling or water contamination. Similarly, viruses may be introduced by error, but viruses are also widely used as a delivery vehicle for cell reprogramming in the manufacturing process. Mycoplasma may typically be introduced in the manufacturing process via a contaminated reagent but also through operator handling.

Therefore, regardless of efforts made to prevent contaminants from contaminating the product, there is a need to check for presence of contaminants. Also, regulatory agencies may require manufacturing companies to test for presence of contaminants both during the manufacturing process and in the final product.

Current analytical methods used to monitor contaminants are time consuming and delay product release. The analytical methods typically rely on sample collection followed by lengthy culture times over several days to weeks and rely on trained eyes of skilled personnel to recognize growth patterns and identify potential contaminants. The time to obtain results of analysis is long and when conclusions on problems in the manufacturing process are drawn and no direct corrective actions can be taken or are at best largely delayed. A contaminated batch cannot be re-processed and sterilized and thus has to be discarded.

While efforts are being made in shortening time-to-results for analysis, analysis results are provided with such a delay that contaminated batches need to be discarded. Therefore, there is a need to improve monitoring of a process that may be subject to biocontamination.

WO 2021/252850 A1 discloses an imaging system and process for rapid screening and detection of particles. WO 2015/053393 A1 discloses an imaging cell sorter. US 2017/0061619 A1 discloses analysis and sorting of objects in flow. WO 2022/187608 A1 discloses systems and methods for concentrating sorted cell populations. US 2020/0086321 A1 discloses a method and a device for encapsulating cell in liquid droplet for single-cell analysis. US 2017/0218424 A1 discloses identification and monitoring of cells by dielectrophoretic tracking of electrophysiology and phenotype.

### Summary

An objective of the present description is to provide monitoring of a process, such as a manufacturing process, wherein results of monitoring are made available quickly. In particular, an object of the present description is to provide results of monitoring such that measures may be taken in an ongoing manufacturing process.

These and other objectives are at least partly met by the invention as defined in the independent claims. Preferred embodiments are set out in the dependent claims.

According to a first aspect, there is provided a method for monitoring a monitor material of a process, such as a manufacturing process, said method comprising: detecting a suspicious particle in a sample of the monitor material using an imaging system configured to image the sample; selectively diverting the suspicious particle from a fluid flow of the sample to an analysis flow; activating a nucleic acid test (NAT) device, wherein said activating is triggered based on detecting of the suspicious particle in the sample; receiving by the NAT device the analysis flow comprising the suspicious particle; and subjecting the suspicious particle to a NAT analysis.

Thanks to the method, a sample may be subject to an initial analysis based on imaging of the sample. This enables rapid and continuous screening of samples from the process, such as a manufacturing process, e.g., a process for manufacturing of a biological material. The imaging of the samples allows detection of suspicious particles. Even though the imaging may or may not necessarily be able to distinguish between bacteria, viruses, mycoplasma, and/or other contaminants, harmful or not, the imaging may allow detecting when suspicious particles are present in the sample. Hence, an initial screening may be provided and, only when suspicious particles are detected through imaging, further analysis is performed.

This implies that further analysis may be performed relatively rarely, since presence of suspicious particles are not common, in particular, as efforts are made in a development and/or manufacturing process to limit contamination of the process.

When a suspicious particle is detected, the suspicious particle is diverted to the analysis flow. The analysis flow is directed towards a NAT device for performing NAT analysis. Thanks to the screening made through detection of suspicious particles by the imaging of the sample, the NAT device may be used only for small fractions of monitor material extracted from the manufacturing process. This implies that the NAT device may be efficiently used, such that for instance an amount of NAT reagents used for analysis of samples may be limited.

The NAT device is not necessarily able to provide analysis of sample volumes with a throughput such that sufficient volumes are subject to NAT analysis in order to provide continuous and real-time analysis in relation to the manufacturing process. However, thanks to the NAT device only performing analysis of the analysis flow, which requires significantly smaller throughput volume than a sample volume received from the manufacturing process, the method allows detecting and analyzing suspicious particles continuously. This implies that, if a harmful particle is detected, the manufacturing process may be immediately stopped, or any other measures may be immediately taken such that entire batches of produced biological material need not be affected.

Thanks to the method subjecting the suspicious particle to the NAT analysis, the NAT analysis may determine whether the suspicious particle is harmful and may determine a type of contaminant. Thus, the NAT analysis may determine whether any corrective measures need to be taken for the manufacturing process in view of the detection of the suspicious particle by the imaging of the sample. Hence, thanks to the use of the NAT analysis, any particles detected by the imaging need not trigger measures to be taken in relation to the manufacturing process. Rather, the NAT analysis may be performed to confirm whether the suspicious particle is indeed harmful and whether there is a need for any corrective measures.

The method may be configured to monitor a process for development and/or manufacturing. Thus, the method may be used in different steps of development and/or manufacturing. The method may be configured to monitor any process for which biocontamination may need to be avoided, such as any process involving a sterile step. The method may be configured to monitor a process for development and/or manufacturing of a biological material and/or ointment, food, etc. Although reference is made frequently below to a manufacturing process, it should be realized that the method may also or alternatively be used in relation to a development process, such as a drug development process.

It should be realized that the imaging system being configured to image the sample implies that a representation of the sample is formed. This may imply that an optical image, scan, interference pattern or other optical representation of the sample may be formed. For instance, the imaging system may acquire an interference pattern based on receiving object light and reference light interfering at a detector plane of the imaging system. Hence, the imaging system may be configured to detect a pattern of light intensities over an area of the detector plane, providing a representation of the interference pattern which in turn carries information of the sample. The detected interference pattern may be used for reconstructing an optical image of the sample but may alternatively be directly used for identifying patterns within the interference pattern that correspond to suspicious particles.

It should be realized that the monitor material may be a material that is being manufactured or developed in the process, under sterile conditions. For instance, the monitor material may be a biological material being produced. However, the monitor material may alternatively be a solution, such as a buffer solution or any sterile solution, which is used during the process. Also, the monitor material may be a combination, such that the sample may be a sample of the solution carrying the material, such as the biological material, being produced.

The sample may be presented in a measurement position for being imaged by the imaging system. The sample may be received from the manufacturing process and may be stationary in the measurement position while being imaged. The sample may be transported away from the measurement position and the flow of the sample away from the measurement position may form the flow of the sample. The flow of the sample may by default be directed towards waste or even back to a flow of the manufacturing process. For instance, when no suspicious particle is detected, the entire sample being imaged may be transported along default flow of the sample.

When a suspicious particle is detected, the sample comprising the suspicious particle may be diverted to the analysis flow. Thus, the entire sample being imaged when a suspicious particle is detected may be diverted. This implies that the flow of the sample may be controlled to be diverted from the default flow and be directed towards the analysis flow such that the suspicious particle is diverted to the analysis flow. However, it should be realized that the method may control the selective diverting of the suspicious particle such that the suspicious particle may be diverted without necessarily an entire volume being imaged when the suspicious particle is detected needing to be diverted into analysis flow.

Further, the imaging system may be configured to image a moving sample such that there may be a continuous flow of sample through the measurement position. Then, the flow of sample may by default be directed towards waste or even back to a flow of the manufacturing process and, only when a suspicious particle is detected, part of the flow comprising the suspicious particle will be diverted to the analysis flow.

The selective diverting of the suspicious particle may ensure that the suspicious particle is directed into an analysis flow.

The activating of the NAT device being triggered based on detecting of the suspicious particle in the sample may be achieved in different ways. The NAT device may be activated based directly on the detecting of the suspicious particle in the sample, such as being directly activated as soon as the suspicious particle is detected or being activated using a default time delay between detection of the suspicious particle and activation of the NAT device in order to take into account a time needed for the suspicious particle to be transported to the NAT device. Further, the activating of the NAT device may be triggered based on detecting of the suspicious particle in that the detection of the suspicious particle implies that the NAT device will be used for further analysis of the suspicious particle. However, there may not be a direct time relationship between an event of detecting of the suspicious particle and an event of activating of the NAT device. Rather, the suspicious particle may be tracked and the event of activating the NAT device may be initiated at a particular time, such as when the suspicious particle passes a particular point in a transport path, e.g., when the suspicious particle is diverted from the flow of the sample to the analysis flow.

The NAT device may for instance be configured to subject the suspicious particle to a polymerase chain reaction (PCR) analysis, a nucleic acid sequence-based amplification (NASBA) analysis, or a loop-mediated isothermal amplification (LAMP) analysis or another analysis based on amplification of nucleic acid sequences.

According to an embodiment, the method is performed at line of the process, and wherein the method further comprises extracting a sample from the process for analysis of the sample.

This implies that the method may be part of the process for manufacturing such that any presence of, e.g., harmful bacteria, viruses and/or mycoplasma in the process may be detected in relation to the manufacturing process such that early measures may be taken in view of the detection. This implies that corrective measures may be performed such that the presence of harmful particles may not affect large batches of produced material, such as biological material. Hence, yield of the manufacturing process may be greatly improved.

It should be realized that method being performed at line of the process for manufacturing implies that the method is performed at the vicinity of the manufacturing process and that the extracted sample does not need to be transported to a separate location wherein analysis is performed.

It should be further realized that the method may alternatively be performed on-line. This may imply that the imaging system may image a process line, such as a manufacturing line, and that extraction from the process line may only be performed when a suspicious particle is detected. As yet another alternative, a sample may be extracted for imaging, and the extracted sample may be further returned to the process line after analysis. This implies that waste due to sampling for analysis may be greatly reduced.

According to an embodiment, said activating of the NAT device comprises initiating generation, by a droplet generator of the NAT device, of droplets with NAT reagents, and wherein the method further comprises encapsulating the suspicious particle in a droplet together with NAT reagents.

This implies that the suspicious particle may be subjected to NAT, e.g., PCR, analysis within a small droplet. Hence, NAT analysis may be performed quickly. For instance, the NAT analysis may involve a large number of cycles of heating a volume being subject to PCR analysis. Thanks to the limited volume of the analysis flow, a relatively small volume is to be heated, such that thermal cycling of the PCR analysis may be quickly performed, and limited reagent volumes can be used.

NAT-compatible lysis reagents may potentially also be used and provided in the droplet together with the suspicious particle and the NAT reagents. Thus, the droplet generator may be configured to encapsulate the suspicious particle in a droplet together with NAT reagents and potentially further together with NAT-compatible lysis reagents.

Using droplets in the NAT analysis, a contamination event affecting the manufacturing process may be identified quickly such that the manufacturing process may be controlled almost in real-time in view of results of monitoring the monitor material.

The use of droplets for performing NAT allows a high sensitivity of NAT analysis to presence of contaminants. The method may allow sensitivity to presence of single particles of contaminants.

The use of droplets and only activating of the NAT device when a suspicious particle is detected allows the method to provide a limited use of expensive NAT reagents. Thus, the monitoring of the manufacturing process may be provided in a cost-efficient manner.

The use of droplets in which the NAT analysis is performed allows the method to have a low sensitivity to potential NAT inhibitors that may be present in the sample.

The suspicious particle may be lysed in the droplet which implies that there is no need for a separate preparation step before NAT analysis may be performed.

Further, the use of droplets may prevent the NAT device form being contaminated by pathogenic DNA. For instance, the NAT analysis may be performed in an oil droplet in which the suspicious particle and the NAT reagents are contained. This implies that the NAT device may be re-used for multiple NAT analyses.

According to an embodiment, the method further comprises monitoring of the droplet generator using a droplet generator imaging system for monitoring the encapsulating of the suspicious particle in the droplet.

This implies that the method monitors the suspicious particle being encapsulated in the droplet and will further ensure proper functionality of the droplet generator. Thus, the monitoring of the encapsulation of the suspicious particle may be used for verifying that the result of the NAT analysis is reliable.

The droplet generator imaging system may be separate from the imaging system for imaging the sample for detecting the suspicious particle. The droplet generator imaging system may be configured to image the droplet generator using holographic imaging, wherein an interference pattern between object light and reference light is acquired, similar to what is described above. An imaging system using holographic imaging may be advantageous in that the imaging system may be very compact. For instance, no lenses or objective may be needed in such imaging system.

However, the droplet generator imaging system may alternatively be a lens-based imaging system. In particular, the size of the NAT device may not be controlled by the droplet generator imaging system such that it may not be very important to use a compact droplet generator imaging system.

According to an embodiment, the method further comprises tracking of the droplet encapsulating the suspicious particle in an amplification region of the NAT device.

This implies that the suspicious particle may be followed such that it is known in which position in the amplification region that the suspicious particle is located. The NAT analysis may involve detection of fluorescence from the particle subject to NAT analysis. Thus, by tracking the suspicious particle, it is known from which location in the amplification region that fluorescence is to be expected.

The tracking of the droplet encapsulating the suspicious particle may be performed in many different ways, such as by sensing or otherwise knowing the flow rate of droplets whereby a location of the droplet encapsulating the suspicious particle may be known. The tracking may be performed using an imaging system that images the amplification region. The same imaging system may be configured to detect fluorescence from the suspicious particle. Thus, the imaging system may be a conventional imaging system for forming a visual image of the amplification region. The imaging system may continuously image the amplification region when the NAT device is activated in order to enable tracking of the droplet encapsulating the suspicious particle.

The same imaging system may be used for tracking of the droplet encapsulating the suspicious particle and for monitoring the droplet generator. Alternatively, the same imaging system may be used for tracking of the droplet encapsulating the suspicious particle and for reading out the (fluorescence) NAT analysis result.

However, it should be realized that separate imaging systems could be used.

The droplet encapsulating the suspicious particle may be tracked using holographic imaging, wherein an interference pattern between object light and reference light is acquired, similar to what is described above. An imaging system using holographic imaging may be advantageous in that the imaging system may allow imaging of a large field of view such that the imaging system may follow the droplet while moving through the amplification region. However, the amplification region may be designed to be so small that even a conventional imaging system using an objective defining the field of view could be able to image the entire amplification region within the field of view.

According to an embodiment, the imaging system is configured to image the sample using illumination light from a light source and to detect an interference pattern based on object light having interacted with the sample and reference light, which has not interacted or been affected by the sample.

This may be referred to as holographic imaging. The illumination light may have a spatial coherence such that interference between the object light being affected by interaction by an object or particle within the sample and reference light may cause interference fringes to form. The sample may thus be imaged by detection of the interference pattern, e.g., by detection of interference fringes, which provide information of the sample.

The detected interference pattern may allow reconstruction of an optical image of the sample. However, it may not be necessary to perform reconstruction of an optical image of the sample. Rather, detection of interference fringes in the interference pattern may in itself indicate that a particle is present in the sample, which may be directly used as a detection of the suspicious particle.

The use of an imaging system configured to detect an interference pattern implies that there may not be a need to use any focusing lens in order to form an image on a detector plane. This implies that a large field of view may be imaged simultaneously and also that a depth of field may be large to provide imaging of the sample in three dimensions. Hence, relatively large sample volumes may be simultaneously imaged such that the method allows for fast analysis of large sample volumes.

The light interacting with the sample may interact in many different manners with the sample, such as by being attenuated, reflected, scattered, refracted, diffracted and/or phase modulated by the sample. The reference light may be guided through a different optical path so as to not pass the sample at all or may be transmitted through the sample unaffected by means of the sample being partly transparent. The term "reference light" should be construed as light not being affected by the sample. The object and reference light may be within a common light beam as part of the light beam may interact with the sample and part of the light beam may be transmitted without interacting with the sample.

According to an embodiment, the method further comprises tracking of the suspicious particle in the sample in a fluid flow towards a diverter for diverting the suspicious particle from the sample.

This implies that the suspicious particle may be followed while being transported towards the diverter. Hence, the diverter may divert only a small portion of the sample into the analysis flow, while ensuring that the suspicious particle is diverted into the analysis flow.

Hence, it may be ensured that very small volumes are transported to the NAT device such that the NAT device may be efficiently used, such that for instance an amount of NAT reagents used for analysis of samples may be limited.

The tracking of the suspicious particle may be achieved by an imaging system using holographic imaging, wherein an interference pattern between object light and reference light is acquired, similar to what is described above. Using holographic imaging, a large field of view may be imaged such that the movement of the suspicious particle towards the diverter may be followed within the field of view.

The tracking of the suspicious particle may be performed using the same imaging system that is configured to image the sample for detecting an interference pattern. Alternatively, separate imaging systems may be used. This may allow each of the imaging systems to be separately optimized for its specific purpose, i.e., for detection of a suspicious particle and for tracking of a particle.

According to an embodiment, the method further comprises subjecting the suspicious particle to an electric field in the analysis flow between the diverter and the NAT device, and tracking of the suspicious particle in the analysis flow comprising analyzing impact of the electric field on a movement of the suspicious particle for determining a characteristic of the suspicious particle.

Using an electric field, typically a non-uniform electric field, a force may be exerted onto the suspicious particle based on dielectrophoresis (DEP). The force may depend on electrical properties of the suspicious particle and on shape and size of the suspicious particle.

A non-uniform electric field may be generated based on providing an alternating current (AC) electric field. The suspicious particle may thus be subjected to an AC electric field defining a frequency. Further, the force exerted on the suspicious particle may be dependent on frequency of the electric field. The frequency of the electric field may provide a selectivity in manipulating movement of particles, such that impact on movement of the suspicious particle may provide information about the suspicious particle. However, it should be realized that it may not be necessary to use a particular frequency of the electric field in order to obtain information of a characteristic of the suspicious particle.

The suspicious particle may further be tracked while the suspicious particle is subjected to the electric field, such that movement of the suspicious particle in the electric field may be followed. This allows analysis of impact of the electric field which may be used for determining a characteristic of the suspicious particle.

The determined characteristic of the suspicious particle may be used as further input for deciding whether the suspicious particle is to be subjected to further NAT analysis. However, the determined characteristic may alternatively be used as further information in analysis of the suspicious particle and subjecting of the suspicious particle to NAT analysis need not be made in dependence of the impact of the electric field on the movement of the suspicious particle.

For instance, the suspicious particle may be subjected to the electric field in order to allow differentiation between dead and live bacteria.

According to an embodiment, the method further comprises transporting the suspicious particle through a microfluidic delay line between the diverter and the NAT device.

The microfluidic delay line may define a microfluidic path requiring the suspicious particle to travel a relatively long distance between the diverter and the NAT device. The microfluidic delay line may be provided by simply arranging the NAT device far away from the diverter. However, in order to provide a compact apparatus, the microfluidic delay line may be arranged to define a path with many turns, such as a meandering path, such that the microfluidic path may be long even though the microfluidic delay line is confined to a small area.

This implies that there may be a delay in time between the suspicious particle being detected and the suspicious particle reaching the NAT device, since the suspicious particle needs to travel along the microfluidic delay line. This may allow for the NAT device, which is activated based on the detecting of the suspicious particle, to be functioning properly when the suspicious particle reaches the NAT device.

In particular, initial droplets generated when a droplet generator is started may be unstable and heterogeneous. Thus, the droplet generator may require some time for becoming stable. Using the microfluidic delay line, it may be ensured that the suspicious particle does not reach the NAT device until the droplet generator is stabilized.

It should be realized that delay in time between the suspicious particle being detected and the suspicious particle reaching the NAT device may be achieved in other ways. For instance, the flow of the sample towards the diverter may be intermittent, e.g., when the sample is stationary when being imaged for detecting the suspicious particle. Thus, the flow of the sample towards the diverter may not be initiated until the NAT device is stabilized. In such case, no microfluidic delay line may be needed between the diverter and the NAT device and there may be a short path between the diverter and the NAT device.

The analysis flow between the diverter and the NAT device may be separately controlled to a flow of the sample to the diverter and, when not diverted towards the NAT device, further to waste or back into the manufacturing process. Thus, the analysis flow may have a different flow speed or flow rate compared to the flow of the sample to the diverter. The flow speed or flow rate of the analysis flow may be controlled to suit the NAT device. For instance, a separate pump may be used for controlling the flow rate of the analysis flow.

According to a second aspect, there is provided an apparatus for monitoring a monitor material of a process, such as a manufacturing process, said apparatus comprising: a contaminant identification device configured to receive a sample of the monitor material, wherein the contaminant identification device comprises an imaging system comprising a light source for generating illumination light, wherein the imaging system is configured to detect an interference pattern based on object light having interacted with the sample and reference light of the illumination light, and wherein the contaminant identification device is configured to provide a detection of a suspicious particle in the sample; a diverter configured to selectively divert the suspicious particle from a fluid flow of the sample to an analysis flow; and; a nucleic acid test (NAT) device connected to receive the analysis flow, wherein the NAT device is configured to be activated based on the detection of the suspicious particle and configured to subject the suspicious particle to a NAT analysis.

Effects and features of this second aspect are largely analogous to those described above in connection with the first aspect. Embodiments mentioned in relation to the first aspect are largely compatible with the second aspect.

The apparatus may allow the NAT device to be activated only when a suspicious particle is detected, such that the NAT device may be efficiently used, such that for instance an amount of NAT reagents used for analysis of samples may be limited.

Also, thanks to the contaminant identification device, a screening of relatively large sample volumes may be performed without the entire sample volumes needing to be subject to NAT analysis by the NAT device. This implies that throughput of sample volumes through the contaminant identification device may be relatively high while still allowing the NAT device to analyze any suspicious particles detected in order to determine whether the suspicious particle is harmful. Thus, the apparatus is particularly suitable for providing continuous and real-time analysis in relation to the manufacturing process.

According to an embodiment, the apparatus further comprises a sample collector for providing the sample to the contaminant identification device, wherein the sample collector is connected to the process.

This implies that the apparatus may be arranged for providing screening and analysis of suspicious particles at line of the process, such as the process for manufacturing of the biological material.

According to an embodiment, the NAT device comprises a droplet generator configured to encapsulate the suspicious particle in a droplet together with NAT reagents.

This implies that the suspicious particle may be subjected to NAT analysis within a small droplet. NAT analysis may be performed quickly.

According to an embodiment, the apparatus further comprises a droplet generator imaging system configured to monitor encapsulating of the suspicious particle in the droplet.

This implies that the droplet generator imaging system monitors the suspicious particle being encapsulated in the droplet to ensure proper functionality of the droplet generator.

According to an embodiment, the apparatus further comprises a NAT imaging system configured to track the droplet encapsulating the suspicious particle.

The NAT imaging system may be configured to track the droplet encapsulating the suspicious particle in an amplification region of the NAT device.

This implies that the suspicious particle may be followed such that it is known in which position in the amplification region that the suspicious particle is located.

The NAT imaging system may be integrated with the droplet generator imaging system such that a single imaging system may be used for monitoring encapsulating of the suspicious particle in the droplet and for tracking the droplet encapsulating the suspicious particle.

According to an embodiment, the contaminant identification device is further configured to track the suspicious particle in a fluid flow towards the diverter.

This implies that the suspicious particle may be followed while being transported towards the diverter. Hence, the diverter may divert only a small portion of the sample into the analysis flow, while ensuring that the suspicious particle is diverted into the analysis flow.

According to an embodiment, the contaminant identification device further comprises a dielectrophoresis device configured to subjecting the suspicious particle to an electric field in the analysis flow between the diverter and the NAT device, wherein the apparatus is further configured track the suspicious particle in the analysis flow for analyzing impact of the electric field on a movement of the suspicious particle for determining a characteristic of the suspicious particle.

The dielectrophoresis device may provide a force on the suspicious particle such that movement of the suspicious particle is affected. The impact of the electric field on the movement may provide an indication of a characteristic of the suspicious particle.

By subjecting the suspicious particle to the electric field while the suspicious particle is tracked in the analysis flow, further information of the suspicious particle may be obtained. This information may be used as further input for controlling the NAT analysis or as further information for analyzing the suspicious particle.

According to an embodiment, the imaging system of the contaminant identification device is configured to image the suspicious particle for detection of the suspicious particle in the sample and for tracking of the suspicious particle in the flow towards the diverter.

This implies that a single imaging system may be used for detection of the suspicious particle and for tracking of the suspicious particle. This may imply that the apparatus may be relatively inexpensive, as there is no need for separate imaging systems, reducing hardware of the apparatus. This may further facilitate having a compact apparatus.

According to an embodiment, the apparatus further comprises a microfluidic delay line between the diverter and the NAT device.

This implies that there may be a delay in time between the suspicious particle being detected and the suspicious particle reaching the NAT device, since the suspicious particle needs to travel along the microfluidic delay line. This may allow for the NAT device, which is configured to be activated based on the detecting of the suspicious particle, to be functioning properly when the suspicious particle reaches the NAT device.

### Brief description of the drawings

The above, as well as additional objects, features, and advantages of the present inventive concept, will be better understood through the following illustrative and non-limiting detailed description, with reference to the appended drawings. In the drawings like reference numerals will be used for like elements unless stated otherwise.
Fig. 1 is a schematic representation of arrangement of an apparatus according to an embodiment in relation to a manufacturing process for monitoring the process.
Fig. 2 is a schematic view of an apparatus according to an embodiment.
Fig. 3 is a flowchart of a method according to an embodiment.

### Detailed description

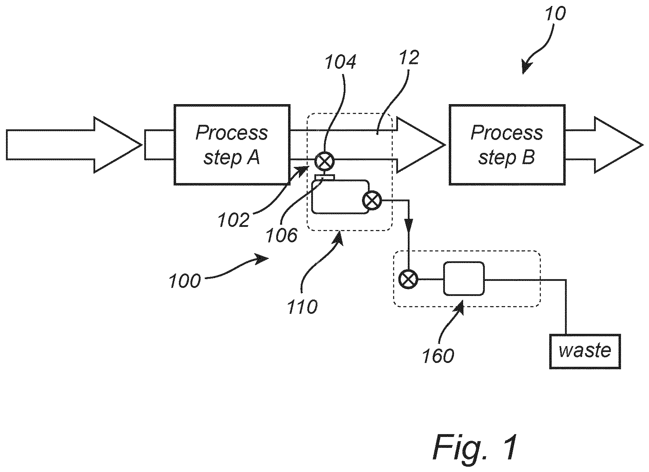

Referring now to Fig. 1, a flow of a process for manufacturing, here discussed as a process for manufacturing a biological material, is illustrated with an apparatus 100 for monitoring the process for manufacturing arranged in relation to the flow of the process for manufacturing. Herein, process for manufacturing and manufacturing process are used interchangeably. It should be further realized that the apparatus 100 may be used for monitoring a process for development, such as development of a biological material, such as a drug development process. Thus, even if referring to a process for manufacturing or a manufacturing process below, the apparatus 100 may also or alternatively be used for monitoring a process for development.

The apparatus 100 may be arranged at line of a manufacturing arrangement 10 of the manufacturing process. The apparatus 100 may be connected to any process line 12 of the manufacturing arrangement. For instance, the apparatus 100 may be connected to a process line 12 between two chambers for performing different process steps, illustrated as process step A and process step B. However, it should be realized that the apparatus 100 may be connected to any part of the manufacturing arrangement 10. Also, it should be realized that a plurality of apparatuses 100 may be arranged in relation to different parts of the manufacturing arrangement 10 in order to allow monitoring of the manufacturing process in several different stage of the manufacturing process.

The apparatus 100 may comprise a sample collector 102 for acquiring a sample from the manufacturing arrangement. The sample collector 102 may comprise a valve 104 for allowing control of a flow of a sample from the process line 12. It should be realized that a flow of a sample from the manufacturing arrangement 10 may be provided in different manners.

It should be realized that the apparatus 10 may comprise an autosampler for acquiring a sample from the manufacturing arrangement. The autosampler may be configured to periodically collect samples from the manufacturing process and to bring the samples to the apparatus 100.

The sample is a sample of a monitor material of the manufacturing process. The monitor material may comprise the biological material being manufactured in the manufacturing process. However, the monitor material may not necessarily comprise the biological material but may rather be a buffer solution or any sterile solution used during the manufacturing process.

Thus, a sample may be extracted from the manufacturing arrangement 10. The sample collector 102 may comprise a filter 106 which is configured to filter the sample extracted from the manufacturing arrangement 10. The filter 106 may be configured to filter the sample so as to provide a sample that is fit for being imaged and analyzed for detecting suspicious particles. For instance, the filter 106 may provide a filtering by size such that large size particles are not allowed to pass the filter 106. For instance, the filter 106 may prevent eukaryotic cells from passing the filter 106 and may be configured to block particles having a size larger than 5 µm.

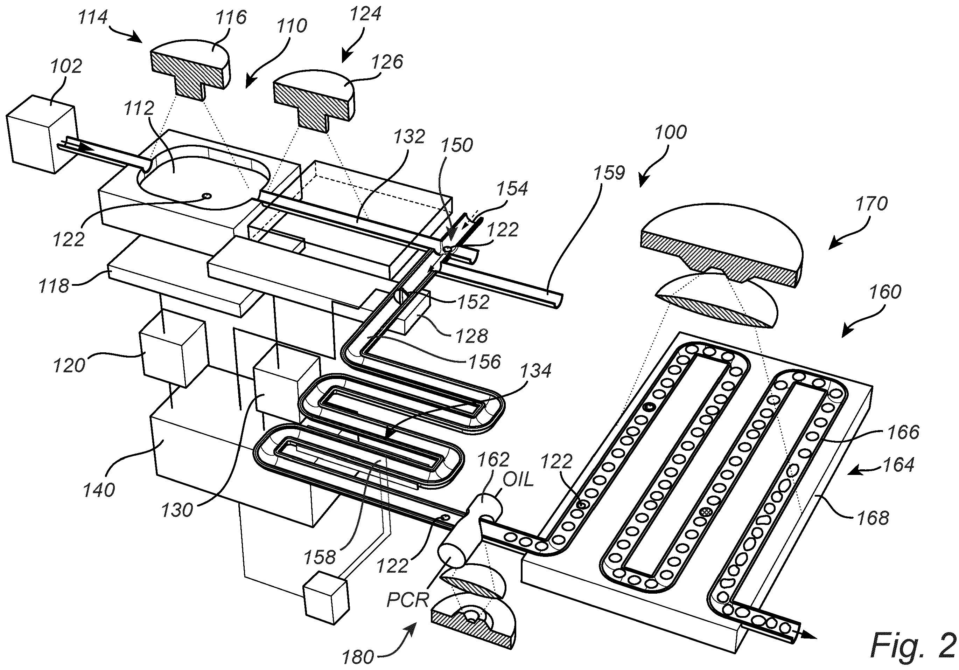

Referring now to Fig. 2, the apparatus 100 will be described in further detail. The apparatus 100 comprises a contaminant identification device 110. The sample collector 102 may be configured to provide the sample to the contaminant identification device 110.

The contaminant identification device 110 may comprise a sample receiver 112, which is configured to receive a sample and define a measurement position of the contaminant identification device 110. The sample receiver 112 may be in form of a chamber in which the sample from the manufacturing process may be received. For instance, the sample receiver 112 may be in fluid connection with the sample collector 102 for receiving the sample.

The sample receiver 112 may define a volume which may be simultaneously imaged an imaging system 114. The sample receiver 112 may for instance define a sample volume of 10 µl, such as the sample receiver 112 having dimensions of 10 mm x 10 mm x 0.01 mm, defining an area of 10 mm x 10 mm to be imaged with a depth of 0.01 mm.

The apparatus 100 may be configured for providing a stationary sample in the sample receiver 112 during imaging. However, the apparatus 100 may alternatively be configured to provide a flow of the sample through the sample receiver 112, such that the sample is imaged during transport through the sample receiver 112.

The imaging system 114 comprises a light source 116 for generating illumination light having a spatial coherence. The light source 116 may for instance be a laser or a light-emitting diode (LED), wherein light output by the LED is guided through a pinhole for forming spatially coherent light.

The illumination light illuminates the sample such that object light is formed by illumination light interacting with the sample, e.g., being attenuated, reflected, scattered, refracted, diffracted and/or phase modulated by the sample. Further, the illumination light forms reference light which has not interacted with the sample. If the sample is mostly transparent, the reference light may be formed by illumination light passing through the sample. However, part of the illumination light forming reference light may alternatively be guided through a separate path so as not to pass the sample and the reference light and object light may then be brought into a common optical path.

The object light and reference light form an interference pattern. For instance, the interference pattern may be based on scattered light and non-scattered light, wherein scattered light is illumination light being scattered by the sample and non-scattered light is illumination light that has not been scattered by the sample.

The interference pattern may carry information of particles in the sample that affect the light, e.g., by scattering. The interference pattern may comprise interference fringes of alternating higher and lower intensity of light.

The imaging system 114 may comprise a detector 118, comprising an array of light-sensitive areas arranged in a detector plane. The interference pattern between object light and reference light at the detector plane may be detected by the array of light-sensitive areas so as to provide a detection of distribution of intensity of light in the detector plane. Thanks to the interference pattern being formed, there is no need for any focusing lens and the imaging system 114 may therefore be configured to simultaneously image a large field of view. However, it should be realized that the imaging system 114 may still comprise a focusing lens.

The imaging system 114 may further comprise a processing unit 120 configured to receive input from the detector 118, representing the interference pattern. The processing unit 120 may be configured to reconstruct an image of the sample based on the input from the detector 118.

The processing unit 120 may further be configured to identify presence of particles in the imaged sample so as to detect a suspicious particle 122 in the sample. The processing unit 120 may process the reconstructed image in order to detect the suspicious particle 122. However, it should be realized that the interference pattern in itself may comprise sufficient information in order to directly detect the suspicious particle 122 without an image of the sample being necessarily reconstructed.

The suspicious particle 122 may for instance be bacteria, viruses and/or mycoplasma. Presence of the suspicious particle 122 in the manufacturing process may imply contamination of the biological material being manufactured such that the contaminated biological material needs to be discarded. Hence, early detection of suspicious particles 122 may avoid discarding large volumes of contaminated biological material.

The processing unit 120 of the imaging system 114 may be configured to reconstruct an image of the sample so as to allow an optical image to be formed which may be analyzed for determining whether any objects in the reconstructed image correspond to a suspicious particle 122 that needs to be further analyzed. Thus, the reconstructed image may be further processed by the imaging system 114 in order to decide whether there is a presence of suspicious particles 122.

The contaminant identification device 110 is thus configured to provide a detection of the suspicious particle 122 in the sample. When such a detection of the suspicious particle 122 occurs, the contaminant identification device 110 may send a trigger signal which may trigger further action by the apparatus 100.

The apparatus 100 may comprise a control unit 140 which may be configured to control functionality of the apparatus 100. The control unit 140 may be configured to receive the trigger signal from the contaminant identification device 110 and may be configured to initiate other functionalities of the apparatus 100 in response to the trigger signal.

The contaminant identification device 110 may further be configured to track the suspicious particle 122 in a flow of the sample from the sample receiver 112. The tracking of the suspicious particle 122 may be performed by the imaging system 114. However, the tracking of the suspicious particle 122 may alternatively be performed by a separate tracking imaging system 124. A tracking process in the imaging system 114 or by the separate tracking imaging system 124 may be initiated by the control unit 140 in response to the detection of the suspicious particle 122.

The tracking imaging system 124 may comprise a light source 126 and a detector 128 and may be configured to detect an interference pattern based on object light and reference light in a manner as described above for the imaging system 114. The interference pattern may be processed by a processing unit 130 for tracking of the suspicious particle 122. Even if the tracking imaging system 124 may comprise a separate light source 126 and detector 128 from the imaging system 114, the tracking imaging system 124 may share processing unit with the imaging system 114 such that the same processing unit 120 may process the interference patterns detected by the detector 118 of the imaging system 114 and the detector 128 of the tracking imaging system 124.

Since the tracking imaging system 124 only needs to follow the suspicious particle 122, there may not be any need for the tracking system to reconstruct images of the sample during tracking. Rather, a location of the suspicious particle 122 may be determined directly based on the interference pattern, e.g., based on location of interference fringes in the detected interference pattern.

Also, since the tracking imaging system 124 does not need to provide any detailed analysis of the suspicious particle 122, the tracking imaging system 124 may provide imaging with a lower resolution than the imaging system 114 for detecting presence of the suspicious particle 122. This implies that a resolution of the array of light-sensitive areas of the detector 128 may be lower than the resolution of the array of light-sensitive areas of the detector 118.

The tracking imaging system 124 may be configured to continuously image a flow of the sample for tracking the suspicious particle 122. The tracking imaging system 124 may be configured to track the suspicious particle 122 through a channel 132 providing a fluid connection between the sample receiver 112 and a diverter 150. Thus, the tracking imaging system 124 may be configured to track the suspicious particle 122 in a separate part of the apparatus 100 from the sample receiver 112 and the tracking imaging system 124 may in such case need to be separate from the imaging system 114.

However, the diverter 150 may alternatively be arranged at an output of the sample receiver 112, such that the diverter 150 may control flow of the sample when being output from the sample receiver 112. In such case, the tracking of the suspicious particle 122 may be performed within the sample receiver 112 and may be performed by the same imaging system 114 that provides the detection of the suspicious particle 122 in the sample.

Detection of suspicious particles 122 in the sample may be very rare events. The manufacturing process may be strictly controlled in order to substantially limit the risks of contaminants being present in the manufacturing process. Thus, most samples received by the contaminant identification device 110 will not comprise any contaminant at all.

The apparatus 100 may be configured to provide a default flow of the sample past the diverter 150, where no further analysis of the sample is needed. When the sample does not comprise any suspicious particle 122, the apparatus 100 may be configured to pass the flow of the sample to waste. However, the apparatus 100 may alternatively be configured to pass the flow of the sample back to the manufacturing process so that the apparatus 100 may form an on-line contaminant detection in the manufacturing process.

The apparatus 100 may be configured to screen relatively large sample volumes through the contaminant identification device 110, which performs screening of samples through imaging of the sample. Thus, although each individual sample in the sample receiver 112 may be relatively small, e.g., 10 µl, throughput through the contaminant identification device 110 may be sufficient to provide reliable detection of presence of contaminants in the manufacturing process. For instance, the apparatus 100 may be configured to analyze sample volumes totaling 10 ml over 8 hours or in other embodiments totaling 10 ml over 30 minutes, which is in line with sample volumes collected using conventional techniques where analysis is made through sample collection followed by lengthy culture times over several weeks.

As mentioned above, the apparatus 100 comprises a diverter 150. The diverter 150 is configured to control flow of the sample from the contaminant identification device 110. The diverter 150 may be associated with a junction of fluid transport from the contamination identification device 110, wherein the flow of the sample may be passed to waste (or back to the manufacturing process) or selectively, based on detection of the suspicious particle 122 by the contamination identification device 110, passed into an analysis flow leading to a nucleic acid test (NAT), for example a polymerase chain reaction (PCR) device 160.

The diverter 150 may be triggered by the control unit 140 to selectively divert the suspicious particle 122 from default flow of the sample to the analysis flow. The diverter 150 may be triggered to output an entire sample being imaged in the sample receiver 112 to the analysis flow, upon detection of the suspicious particle 122 in the sample. In such case, no tracking of the suspicious particle 122 in the flow of the sample towards the diverter 150 may be needed.

Alternatively, the diverter 150 may be triggered to selectively divert a small portion of the sample being imaged in the sample receiver 112 to the analysis flow. In such case, the diverter 150 may be triggered based on tracking of the suspicious particle 122 such that the diverter 150 selectively passes flow of the sample into the analysis flow when the suspicious particle 122 reaches the diverter 150.

The diverter 150 may comprise a valve 152 that is selectively actuated for opening or closing the valve 152 depending on which path the flow of the sample should be directed to by the diverter 150. The valve 152 may be arranged in a channel 156 for the analysis flow and the valve 152 may hence be closed when the flow of the sample is not to be directed to the analysis flow. The diverter 152 may further comprise a fluid connection 154 for providing a buffer solution for carrying the suspicious particle 122 into the analysis flow. The fluid connection 154 may be arranged in the junction such that flow of the buffer solution into the junction will be directed towards the channel 156 for the analysis flow.

Thus, when the diverter 150 selectively diverts the suspicious particle 122 into the analysis flow, the diverter 150 may be controlled to open the valve 152. Further, control may be provided to push a buffer solution through the fluid connection 154 such that the flow of the buffer solution may bring the suspicious particle 122 into the channel 156 for analysis flow.

The apparatus 100 further comprises a NAT device 160. The analysis flow may be transported through the channel 156 to the NAT device 160. The NAT device 160 is activated based on the detection of the suspicious particle 122. Thus, the control unit 140 may be configured to send an initiation signal to the NAT device 160 in response to the trigger signal from the contaminant identification device 110.

The NAT device 160 may need some time for stabilizing functionality of the NAT device 160. Therefore, in order to ensure that the NAT device 160 has assumed stable operation before the suspicious particle 122 reaches the NAT device 160, the channel 156 for transporting analysis flow from the diverter 150 to the NAT device 160 may comprise a microfluidic delay line 158. This implies that the analysis flow will need to travel along a relatively long path between the diverter 150 and the NAT device 160 such that it will take some time for the suspicious particle 122 to reach the NAT device 160. Hence, the NAT device 160 may assume a stable operation before the suspicious particle 122 reaches the NAT device 160.

The microfluidic delay line 158 may be arranged to transport analysis flow through a plurality of turns. For instance, the microfluidic delay line 158 may define a meandering shape of the channel for transporting analysis flow. Thus, the microfluidic delay line 158 may be arranged in a small area having a small size in two dimensions even though the microfluidic delay line 158 may be relatively long. This implies that the apparatus 100 may be compact while allowing a long microfluidic delay line 158.

It should be realized that the apparatus 100 may be configured to ensure that the suspicious particle 122 does not reach the NAT device 160 before the PCR device 160 has assumed a stable operation without the apparatus 100 necessarily including the microfluidic delay line 158. For instance, if the sample is stationary in the sample receiver 112 during imaging, transport of the sample from the sample receiver 112 may be delayed based on the detection of the suspicious particle 122 in the sample such that the suspicious particle 122 does not reach the NAT device 160 before the NAT device 160 has assumed stable operation.

The channel 156 for transporting analysis flow may have a further fluid connection 159 for providing a buffer solution into the channel 156. This fluid connection 159 may be used for providing a buffer solution to initially provide fluid to the NAT device 160 when the NAT device 160 is activated such that there is a fluid supply to the NAT device 160 before the suspicious particle 122 reaches the NAT device 160.

The apparatus 160 may further comprise a tracking system for tracking the suspicious particle 122 during transport in the analysis flow to the NAT device 160. Such tracking system may be similar to the tracking imaging system 124 described above. The tracking system for tracking the suspicious particle 122 in the analysis flow may be separate from the tracking imaging system 124. Alternatively, the same tracking imaging system 124 may be used, being configured to view the flow of the sample towards the diverter 150 and the analysis flow within the same field of view.

The apparatus 100 may further comprise a dielectrophoresis device 134 configured to subjecting the suspicious particle 122 to an electric field in the analysis flow between the diverter 150 and the NAT device 160. The dielectrophoresis device 134 may be configured to subjecting the suspicious particle to a non-uniform electric field, such as providing an electric field based on an alternating current (AC) signal. The dielectrophoresis device 134 may thus exert a force on the suspicious particle 122 which may be dependent on electrical properties, size and/or shape of the suspicious particle 122 and also on a frequency of the electric field.

Thus, movement of the suspicious particle 122 may be affected by the electric field and provide information of a characteristic of the suspicious particle 122.

The tracking system for tracking the suspicious particle 122 in the analysis flow may track the suspicious particle while the suspicious particle 122 is subjected to the electric field. Thus, such tracking system may be configured to follow the movement of the suspicious particle 122 while the suspicious particle 122 is subjected to the electric field.

The processing unit 130 and/or the control unit 140 may be configured to analyze the movement of the suspicious particle 122 for determining a characteristic of the suspicious particle 122. The determined characteristic of the suspicious particle 122 may be used as input for analysis of the suspicious particle 122 and/or may be used as input for controlling the NAT device 160.

The dielectrophoresis device 134 may comprise at least two electrodes arranged on opposite sides of the microfluidic delay line 158. The dielectrophoresis device 134 may provide a signal to the electrodes for forming an electric field in the microfluidic delay line 158. The dielectrophoresis device 134 may further be controlled by the control unit 140. For instance, the dielectrophoresis device 134 may be activated by the control unit 140 upon detection of the suspicious particle 122 in the sample.

The dielectrophoresis device 134 and tracking of the movement of the suspicious particle 122 may for instance be used for distinguishing between dead and live bacteria.

The buffer solution that may be provided through the fluid connection 159 may be suited for dielectrophoresis analysis, for instance for distinguishing between dead and live bacteria.

The NAT device 160 may comprise a droplet generator 162. The droplet generator 162 may be configured to receive the analysis flow and may further have inlets for separately receiving an oil or another fluid suitable for forming droplets within the fluid of the analysis flow. The analysis flow may comprise water, such that the droplet generator 162 may suitably be configured to receive a hydrophobic fluid, such as oil.

The droplet generator 162 may further be configured to receive NAT reagents for the NAT reaction. The droplet generator 162 may be configured to form droplets of oil or another fluid, wherein NAT reagents are arranged in the droplets. When the droplet generator 162 receives a particle in the analysis flow, the particle is encapsulated in a droplet with the NAT reagents.

Droplet generation may require accurate control of flow velocity into the droplet generator 162. In particular, droplet generation may need an accurate and constant flow velocity of the analysis flow.

Thus, when the NAT device 160 is activated and the droplet generator 162 starts to generate droplets, the first droplets generated may be unstable and heterogeneous. After a while, the droplet generator 162 may generate stable and homogeneous droplets such that the droplet generator 162 has a stable operation. Thanks to delaying the suspicious particle 122 from reaching the NAT device 160, the droplet generator 162 may have a stable operation when the suspicious particle 122 reaches the NAT device 160. Heterogeneous, non-uniform droplets will not be used for measurements.

The droplet generator 162 is configured to encapsulate the suspicious particle 122 in a single droplet together with NAT reagents. For instance, the NAT reagents may comprise Taq polymerase, salts and/or nucleotides.

The NAT device 160 may further comprise an analysis chamber 164 in which the polymerase chain reaction takes place. The analysis chamber 164 may comprise an amplification channel 166, which is configured to receive the droplets from the droplet generator 162.

The NAT device 160 may further comprise a heating element 168. The heating element 168 may be integrated directly with the analysis chamber 164 or may be external to the analysis chamber 164. For instance, the heating element 168 may be a Peltier element.

The NAT device 160 may be configured to subject the suspicious particle 122 being encapsulated in a droplet to NAT analysis. The amplification channel 166 is heated by the heating element to 90-95°C to lyse the suspicious particle 122, e.g., the bacteria, *in situ.* Lysis can happen with or without the presence of extra NAT-compatible lysis agents. Further, the amplification channel 166 is subsequently subjected to approximately 40 temperature cycles, stepping between 60°C and 95°C.

The thermal cycling together with the reagents may cause amplification of nucleic acids of particular contaminants, such as bacteria, viruses and/or mycoplasma, if present in the droplet, such that an amount of the contaminant is generated that facilitates identification of presence of the contaminant. For instance, the NAT may cause amplification of one or more nucleic acid sequences that allows identification of the presence of one or more contaminants.

The droplet may optionally be split into multiple droplets, after lysis, to increase assay sensitivity. The many droplets are thereafter subjected to NAT analysis. For instance, a standard PCR reaction comprises approximately 40 temperature cycles, stepping between 60°C and 95°C.

After amplification of the contaminant, identification of presence of the contaminant may be determined, for instance, by a fluorescence measurement.

The droplets may be stationary in the amplification channel 166 during thermal cycling. Alternatively, the droplets are transported at a constant velocity through the amplification channel 166 while being subject to the NAT analysis, for example by means of transport of the droplets over different heating zones to allow the droplet with reagents to undergo several PCR cycles. However, transporting of the droplets during NAT analysis may require additional control of flow rate through the amplification channel and tracking of droplets with suspicious particle 122.

After the NAT analysis is finalized, the droplets may be output from the amplification channel 166. The droplets may be discarded or may be recovered for further analysis in separate equipment. This may enable further analysis if the suspicious particle 122 could not be fully characterized by the NAT analysis.

The NAT device 160 provides a high sensitivity to presence of contaminants. The PCR device 160 may be able to detect presence of a single micro-organsism, such as yeast, bacterium, or virus.

The NAT device 160 may be washed by a buffer solution after the NAT analysis has been performed. Thereafter, the NAT device 160 may be turned off as the NAT device 160 may typically be used very rarely. The samples imaged by the contaminant identification device 110 may mostly not comprise any suspicious particles 122 such that the NAT device 160 need not be activated in relation to most samples being analyzed by the apparatus 100.

The amplification channel 166 may be re-used. Each droplet may represent a disposable NAT reactor and may hence prevent contamination of the amplification channel 166. This implies that the entire NAT device 160 may be reused multiple times, which simplifies operation of the apparatus 100 and facilitates integration of the apparatus 100 with a manufacturing process for continuous monitoring of the manufacturing process.

The NAT analysis may be provided as a PCR analysis that may be performed in two steps. The PCR analysis may include a first amplification step which can be viewed as being generic in that it provides whole genome amplification. This first amplification step may generate sufficient material for a specific amplification targeted to a specific micro-organism in a second amplification step.

The NAT device 160 may further be monitored in order to allow tracking of operation of the NAT device 160. The apparatus 100 may therefore comprise a NAT imaging system 170, which is configured to track the droplet encapsulating the suspicious particle 122 when the droplet is in the amplification channel 166. The NAT imaging system 170 may further be configured to make optical measurements to identify and/or quantify presence of contaminants. The optical measurements may for instance imply that fluorescence from the contaminants is detected.

Since the NAT imaging system 170 may be configured to make optical measurements, the NAT imaging system 170 for tracking the droplet encapsulating the suspicious particle 122 may be a conventional imaging system comprising an objective lens and an image sensor for capturing an image of the droplet focused on the image sensor by the objective lens. However, the NAT imaging system 170 may alternatively be based on detection of an interference pattern, as described above for the imaging system 114.

The NAT device 160 may also be monitored to monitor operation of the droplet generator 162 such that it may be verified that the droplet generator 162 is in stable operation and that the suspicious particle 122 is properly encapsulated in a droplet. The apparatus 100 may therefore further comprise a droplet generator imaging system 180, which may be configured to monitor encapsulating of the suspicious particle 122 in the droplet by the droplet generator 162.

The apparatus 100 may comprise a single imaging system providing functionality of both the NAT imaging system 170 and the droplet generator imaging system 180. However, the droplet generator imaging system 180 may alternatively be a separate imaging system.

Since the NAT imaging system 180, as discussed above, may anyway be a conventional imaging system, the droplet generator imaging system 180 may also be a conventional imaging system.

The droplet generator imaging system 180 may be based on detection of an interference pattern, as described above for the imaging system 114. However, a reason for using a droplet generator imaging system 180 based on detection of an interference pattern would mainly be for allowing miniaturization of the apparatus 100. Thus, since the NAT imaging system 170, as discussed above, may anyway be a conventional imaging system, the droplet generator imaging system 180 may also be a conventional imaging system.

In Fig. 2, the suspicious particle 122 is illustrated in several locations of the apparatus 100. This illustration is made in order to allow following how the suspicious particle 122 will move through the apparatus 100. However, it should be realized that it is unlikely that several different suspicious particles 122 are simultaneously present in different parts of the apparatus 100, so the illustration of the suspicious particle 122 in different locations should be understood as illustrating a sequence of events in time.

As described above, the apparatus 100 may comprise processing units 120, 130 and a control unit 140, which may execute various processes for processing information acquired by imaging systems and for controlling functionalities of the apparatus 100.

Each of the processing units 120, 130 and the control unit 140 may be implemented as software being executed on a processor, such as a microprocessor or a central processing unit (CPU), as firmware in an embedded system, or as hardware in form of a specifically designed processing unit, such as an Application-Specific Integrated Circuit (ASIC) or a Field-Programmable Gate Array (FPGA).

It should be realized that the processing units 120, 130 and the control unit 140 need not necessarily be implemented in separate physical entities. Rather, the processing units 120, 130 and the control unit 140 may be implemented as separate threads being executed on a common processor, such as a microprocessor or a CPU.

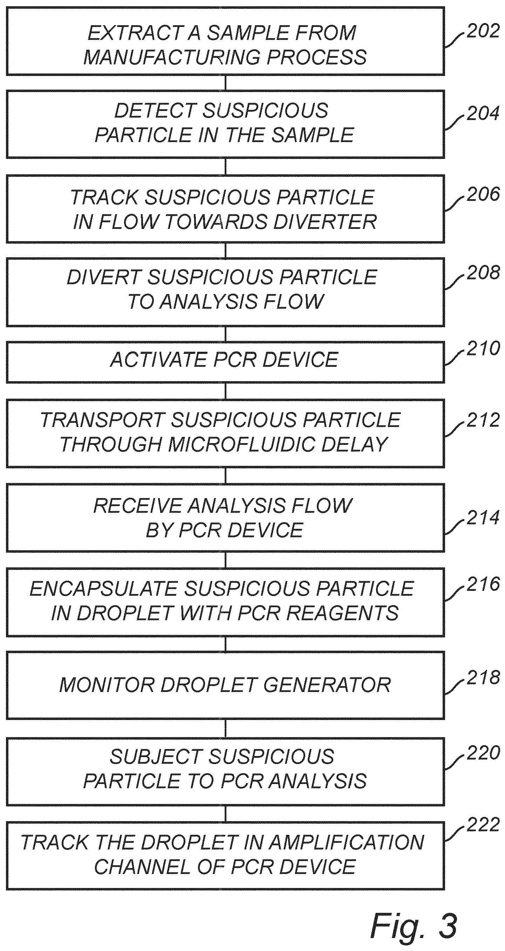

Referring now to Fig. 3, a method for monitoring a monitor material of a process, such as a process for development and/or manufacturing of, for example a biological material, will be discussed. The method may be performed by the apparatus 100 described above.

The method may be implemented at line of the manufacturing process, such that the method is performed at site of the manufacturing process and is able to provide results of monitoring while the manufacturing process is ongoing. The method may alternatively be implemented on-line of the manufacturing process, meaning that samples extracted from the manufacturing process may be re-introduced to the manufacturing process if no contaminants are detected in the samples.

The method may comprise extracting 202 a sample from the manufacturing process for analysis of the sample. The sample may be presented to the imaging system 114.

The method further comprises detecting 204 a suspicious particle 122 in the sample using the imaging system 114. The imaging system 114 may image the sample by detecting an interference pattern based on object light having interacted with the sample and reference light. The imaging system 114 allows simultaneous imaging of a relatively large sample volume by providing a large field of view. The interference pattern detected by the imaging system 114 may be processed, possibly by reconstructing an optical image, in order to detect the suspicious particle 122 in the sample.

The method may further comprise tracking 206 of the suspicious particle 122 in the sample in a flow towards the diverter 150 for diverting the suspicious particle 122 from the sample. The suspicious particle 122 may be tracked by the imaging system 114 or by a separate tracking imaging system 124.

The tracking imaging system 124 may detect a sequence of interference patterns based on object light having interacted with the sample and reference light. The interference pattern detected by the tracking imaging system 124 may be processed, possibly by reconstructing optical images based on the sequence of interference patterns, for tracking of the suspicious particle 122 through the sequence of interference patterns.

The method further comprises selectively diverting 208 the suspicious particle 122 to an analysis flow. Thus, the suspicious particle 122 may be selectively diverted into a flow intended to be subject to analysis, such that analysis may be performed only on selected portions of sample volume being imaged by the imaging system 114.

The method further comprises activating 210 the NAT device 160. The activating of the NAT device 160 is triggered on detecting of the suspicious particle 122 in the sample. The activating of the NAT device 160 may comprise initiating generation, by the droplet generator 162 of the NAT device 160, of droplets comprising NAT reagents.

The droplet generator 162 may initially generate droplets that are unstable and heterogeneous. Thus, the first droplets generated by the droplet generator 162 may not be suitable for performing NAT analysis.

The method may further comprise controlling transport of the suspicious particle 122 such that the suspicious particle 122 does not reach the NAT device 160 before the NAT device 160 has assumed stable operation. For instance, the method may comprise transporting 212 the suspicious particle 122 through a microfluidic delay line 158 between the diverter 150 and the NAT device 160.

The method further comprises receiving 214 the analysis flow by the NAT device 160, wherein the analysis flow comprises the suspicious particle 122. The method may further comprise encapsulating 216 the suspicious particle 122 by the droplet generator 162 in a droplet together with NAT reagents.

The method may further comprise monitoring 218 of the droplet generator 162 using a droplet generator imaging system 180 for monitoring the encapsulating of the suspicious particle 122 in the droplet. Thus, the process of encapsulating of the suspicious particle 122 in the droplet may be monitored to verify that the suspicious particle 122 is properly encapsulated in the droplet, whereby it may be determined whether the NAT analysis performed by the NAT device 160 is reliable.

The droplet generator imaging system 180 may be configured to acquire optical images of the droplet generator using an imaging system having a focusing lens and an image sensor. However, the droplet generator imaging system 180 may alternatively be configured to acquire interference patterns based on object light and reference light.

The method may further comprise receiving the droplet encapsulating the suspicious particle 122 in an amplification channel 166 of the NAT device 160. The method further comprises subjecting 220 the suspicious particle 122 to NAT analysis. The suspicious particle 122 may be subjected to NAT analysis in the droplet while being in the amplification channel 166. The NAT analysis may involve lysis of the suspicious particle 122 by heating the droplet up to 90-95°C and thermal cycling between two temperatures, e.g., subjecting the droplet to 40 temperature cycles, stepping between 60°C and 95°C.

The NAT analysis may further involve identifying presence of a contaminant by detecting fluorescence light. The NAT analysis may utilize fluorescence emission characteristics of the contaminant such that presence of fluorescence light response to illumination of the droplet indicates presence of the contaminant.

The method may further comprise tracking 222 the droplet encapsulating the suspicious particle 122 in the amplification channel 166. Thus, the droplet encapsulating the suspicious particle 122 may be followed through the NAT device 160. The tracking of the droplet may be performed by the NAT imaging system 170, which may also be configured to detect fluorescence from the contaminants.

Since the NAT imaging system 170 may be configured to make optical measurements, the tracking of the droplet encapsulating the suspicious particle 122 may be performed by the NAT imaging system being a conventional imaging system comprising an objective lens and an image sensor for capturing an image of the droplet focused on the image sensor by the objective lens. However, the NAT imaging system 170 may alternatively be based on detection of interference patterns based on object light and reference light.

The monitoring of the droplet generator 162 and the tracking of the droplet encapsulating the suspicious particle 122 may be performed by a single imaging system providing functionality of both the NAT imaging system 170 and the droplet generator imaging system 180. However, the NAT imaging system 170 and the droplet generator imaging system 180 may alternatively be separate imaging systems.

When the NAT analysis is finalized, droplets may be output from the amplification channel 166 of the NAT device 160. The droplets may then be discarded or may be recovered for further analysis, if required.

Thanks to the NAT analysis being performed in droplets, the droplets represent a disposable NAT reactor and hence prevent contamination of the NAT device 160. Thus, the NAT device 160 including the amplification channel 166 may be re-used multiple times.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A method for monitoring a monitor material of a process, such as a manufacturing process, said method comprising:
detecting (204) a suspicious particle (122) in a sample of the monitor material using an imaging system (114) configured to image the sample; and
selectively diverting (208) the suspicious particle (122) from a fluid flow of the sample to an analysis flow; **characterized in that** the method further comprises: activating (210) a nucleic acid test device (160), wherein said activating is triggered based on detecting of the suspicious particle (122) in the sample;
receiving (214) by the nucleic acid test device (160) the analysis flow comprising the suspicious particle (122); and
subjecting (220) the suspicious particle (122) to a nucleic acid test analysis.

2. The method according to claim 1, wherein the method is performed at line of the process, and wherein the method further comprises extracting (202) a sample from the process for analysis of the sample.

3. The method according to claim 1 or 2, wherein said activating of the nucleic acid test device (160) comprises initiating generation, by a droplet generator (162) of the nucleic acid test device (160), of droplets with nucleic acid test reagents, and wherein the method further comprises encapsulating (216) the suspicious particle (122) in a droplet together with nucleic acid test reagents.

4. The method according to claim 3, wherein said method further comprises monitoring (218) of the droplet generator (162) using a droplet generator imaging system (180) for monitoring the encapsulating of the suspicious particle (122) in the droplet.

5. The method according to claim 3 or 4, wherein said method further comprises tracking (122) of the droplet encapsulating the suspicious particle (122) in an amplification region of the nucleic acid test device (160).

6. The method according to any one of the preceding claims, wherein the imaging system (114) is configured to image the sample using illumination light from a light source (116) and to detect an interference pattern based on object light having interacted with the sample and reference light of illumination light.

7. The method according to any one of the preceding claims, further comprising tracking (206) of the suspicious particle (122) in the sample in a fluid flow towards a diverter (150) for diverting the suspicious particle (122) from the sample.

8. The method according to any one of the preceding claims, further comprising subjecting the suspicious particle (122) to an electric field in the analysis flow between the diverter (150) and the nucleic acid test device (160), and tracking of the suspicious particle (122) in the analysis flow comprising analyzing impact of the electric field on a movement of the suspicious particle (122) for determining a characteristic of the suspicious particle (122).

9. An apparatus (100) for monitoring a monitor material of a process, such as a manufacturing process, said apparatus (100) comprising:
a contaminant identification device (110) configured to receive a sample of the monitor material, wherein the contaminant identification device (110) comprises an imaging system (114) comprising a light source (116) for generating illumination light, wherein the imaging system (114) is configured to detect an interference pattern based on object light having interacted with the sample and reference light of the illumination light, and wherein the contaminant identification device (110) is configured to provide a detection of a suspicious particle (122) in the sample;
a diverter (150) configured to selectively divert the suspicious particle (122) from a fluid flow of the sample to an analysis flow; and
a nucleic acid test device (160) connected to receive the analysis flow, wherein the nucleic acid test device (160) is configured to be activated based on the detection of the suspicious particle (122) and configured to subject the suspicious particle (122) to a nucleic acid test analysis.

10. The apparatus according to claim 9, further comprising a sample collector (102) for providing the sample to the contaminant identification device (110), wherein the sample collector (102) is connected to the process.

11. The apparatus according to claim 9 or 10, wherein the NAT device (160) comprises a droplet generator (162) configured to encapsulate the suspicious particle (122) in a droplet together with nucleic acid test reagents.

12. The apparatus according to claim 11, further comprising a droplet generator imaging system (180) configured to monitor encapsulating of the suspicious particle (122) in the droplet.

13. The apparatus according to claim 11 or 12, further comprising a nucleic acid test imaging system (170) configured to track the droplet encapsulating the suspicious particle (122).

14. The apparatus according to any one of claims 9-13, wherein the contaminant identification device (110) is further configured to track the suspicious particle (122) in a fluid flow towards the diverter (150).

15. The apparatus according to claim 14, wherein the contaminant identification device (110) further comprises a dielectrophoresis device (134) configured to subjecting the suspicious particle (122) to an electric field in the analysis flow between the diverter (150) and the nucleic acid test device (160), wherein the apparatus (100) is further configured track the suspicious particle (122) for analyzing impact of the electric field on a movement of the suspicious particle (122) for determining a characteristic of the suspicious particle (122).

## Patentansprüche

1. Verfahren zum Überwachen eines Überwachungsmaterials eines Prozesses, wie etwa eines Herstellungsprozesses, wobei das Verfahren umfasst:
Detektieren (204) eines verdächtigen Partikels (122) in einer Probe des Überwachungsmaterials unter Verwendung eines Bildgebungssystems (114), das dazu konfiguriert ist, die Probe abzubilden; und
selektives Umlenken (208) des verdächtigen Partikels (122) von einem Fluidfluss der Probe zu einem Analysefluss;
**dadurch gekennzeichnet, dass** das Verfahren ferner umfasst:
Aktivieren (210) einer Nukleinsäuretestvorrichtung (160), wobei das Aktivieren basierend auf dem Detektieren des verdächtigen Partikels (122) in der Probe ausgelöst wird;
Empfangen (214), durch die Nukleinsäuretestvorrichtung (160), des Analyseflusses, der das verdächtige Partikel (122) umfasst; und
Aussetzen (220) des verdächtigen Partikels (122) an eine Nukleinsäuretestanalyse.

2. Verfahren nach Anspruch 1, wobei das Verfahren an der Linie des Prozesses ausgeführt wird, und wobei das Verfahren ferner das Extrahieren (202) einer Probe aus dem Prozess zur Analyse der Probe umfasst.

3. Verfahren nach Anspruch 1 oder 2, wobei das Aktivieren der Nukleinsäuretestvorrichtung (160) das Starten einer Generierung, durch einen Tropfengenerator (162) der Nukleinsäuretestvorrichtung (160), von Tropfen mit Nukleinsäuretestreagenzien umfasst, und wobei das Verfahren ferner das Einkapseln (216) des verdächtigen Partikels (122) in einen Tropfen zusammen mit Nukleinsäuretestreagenzien umfasst.

4. Verfahren nach Anspruch 3, wobei das Verfahren ferner das Überwachen (218) des Tropfengenerators (162) unter Verwendung eines Tropfengenerator-Bildgebungssystems (180) zum Überwachen der Einkapselung des verdächtigen Partikels (122) in dem Tropfen umfasst.

5. Verfahren nach Anspruch 3 oder 4, wobei das Verfahren ferner das Nachverfolgen (122) des Tropfens, der das verdächtige Partikel (122) einkapselt, in einer Verstärkungsregion der Nukleinsäuretestvorrichtung (160) umfasst.

6. Verfahren nach einem der vorhergehenden Ansprüche, wobei das Bildgebungssystem (114) dazu konfiguriert ist, die Probe unter Verwendung von Beleuchtungslicht aus einer Lichtquelle (116) abzubilden und ein Interferenzmuster basierend auf Objektlicht, das mit der Probe und dem Referenzlicht des Beleuchtungslichts interagiert hat, zu detektieren.

7. Verfahren nach einem der vorhergehenden Ansprüche, ferner umfassend das Nachverfolgen (206) des verdächtigen Partikels (122) in der Probe in einem Fluidfluss in Richtung auf eine Umlenkvorrichtung (150) zum Umlenken des verdächtigen Partikels (122) aus der Probe.

8. Verfahren nach einem der vorhergehenden Ansprüche, ferner umfassend das Aussetzen des verdächtigen Partikels (122) an ein elektrisches Feld in dem Analysefluss zwischen der Umlenkvorrichtung (150) und der Nukleinsäuretestvorrichtung (160), und
Nachverfolgen des verdächtigen Partikels (122) in dem Analysefluss, umfassend das Analysieren der Auswirkung des elektrischen Feldes auf eine Bewegung des verdächtigen Partikels (122) zum Bestimmen eines Kennzeichens des verdächtigen Partikels (122).

9. Gerät (100) zum Überwachen eines Überwachungsmaterials eines Prozesses, wie etwa eines Herstellungsprozesses, wobei das Gerät (100) umfasst:
eine Vorrichtung (110) zum Identifizieren von Schmutzstoffen, die dazu konfiguriert ist, eine Probe des Überwachungsmaterials zu empfangen, wobei die Vorrichtung (110) zum Identifizieren von Schmutzstoffen ein Bildgebungssystem (114) umfasst, das eine Lichtquelle (116) zum Generieren von Beleuchtungslicht umfasst, wobei das Bildgebungssystem (114) dazu konfiguriert ist, ein Interferenzmuster basierend auf Objektlicht, das mit der Probe interagiert hat, und Referenzlicht des Beleuchtungslichts zu detektieren, und wobei die Vorrichtung (110) zum Identifizieren von Schmutzstoffen dazu konfiguriert ist, eine Detektion eines verdächtigen Partikels (122) in der Probe bereitzustellen;
eine Umlenkvorrichtung (150), die dazu konfiguriert ist, das verdächtige Partikel (122) von einem Fluidfluss der Probe zu einem Analysefluss selektiv umzulenken; und
eine Nukleinsäuretestvorrichtung (160), die angeschlossen ist, um den Analysefluss zu empfangen, wobei die Nukleinsäuretestvorrichtung (160) dazu konfiguriert ist, basierend auf der Detektion des verdächtigen Partikels (122) aktiviert zu werden, und dazu konfiguriert ist, das verdächtige Partikel (122) einer Nukleinsäuretestanalyse auszusetzen.

10. Gerät nach Anspruch 9, ferner umfassend eine Probensammelvorrichtung (102), um die Probe für die Vorrichtung (110) zum Identifizieren von Schmutzstoffen bereitzustellen, wobei die Probensammelvorrichtung (102) an den Prozess angeschlossen ist.

11. Gerät nach Anspruch 9 oder 10, wobei die NAT-Vorrichtung (160) einen Tropfengenerator (162) umfasst, der dazu konfiguriert ist, das verdächtige Partikel (122) in einen Tropfen zusammen mit Nukleinsäuretestreagenzien einzukapseln.

12. Gerät nach Anspruch 11, ferner umfassend ein Tropfengenerator-Bildgebungssystem (180), das dazu konfiguriert ist, das Einkapseln des verdächtigen Partikels (122) in den Tropfen zu überwachen.

13. Gerät nach Anspruch 11 oder 12, ferner umfassend ein Nukleinsäuretest-Bildgebungssystem (170), das dazu konfiguriert ist, den Tropfen, der das verdächtige Partikel (122) einkapselt, nachzuverfolgen.

14. Gerät nach einem der Ansprüche 9 bis 13, wobei die Vorrichtung (110) zum Identifizieren von Schmutzstoffen ferner dazu konfiguriert ist, das verdächtige Partikel (122) in einem Fluidfluss in Richtung auf die Umlenkvorrichtung (150) nachzuverfolgen.

15. Gerät nach Anspruch 14, wobei die Vorrichtung (110) zum Identifizieren von Schmutzstoffen ferner eine Dielektrophoresevorrichtung (134) umfasst, die dazu konfiguriert ist, das verdächtige Partikel (122) einem elektrischen Feld in dem Analysefluss zwischen der Umlenkvorrichtung (150) und der Nukleinsäuretestvorrichtung (160) auszusetzen, wobei das Gerät (100) ferner dazu konfiguriert ist, das verdächtige Partikel (122) zum Analysieren der Auswirkung des elektrischen Feldes auf eine Bewegung des verdächtigen Partikels (122) nachzuverfolgen, um ein Kennzeichen des verdächtigen Partikels (122) zu bestimmen.

## Revendications

1. Procédé de surveillance d'un matériau de surveillance d'un procédé, tel qu'un procédé de fabrication, ledit procédé comprenant :
la détection (204) d'une particule suspecte (122) dans un échantillon du matériau de surveillance à l'aide d'un système d'imagerie (114) configuré pour imager l'échantillon ;
et
la déviation sélective (208) de la particule suspecte (122) d'un flux de fluide de l'échantillon vers un flux d'analyse ;
**caractérisé en ce que** le procédé comprend en outre :
l'activation (210) d'un dispositif de test d'acide nucléique (160), dans lequel ladite activation est déclenchée par la détection de la particule suspecte (122) dans l'échantillon ;
la réception (214) par le test d'acide nucléique (160) du flux d'analyse comprenant la particule suspecte (122) ; et
la soumission (220) de la particule suspecte (122) à un test d'acide nucléique.

2. Procédé selon la revendication 1, dans lequel le procédé est mis en œuvre sur la ligne de production, et dans lequel le procédé comprend en outre l'extraction (202) d'un échantillon du procédé pour analyse.

3. Procédé selon la revendication 1 ou 2, dans lequel l'activation du dispositif de test d'acide nucléique (160) comprend le déclenchement de la génération, par un générateur de gouttelettes (162) du dispositif de test d'acide nucléique (160), de gouttelettes contenant des réactifs du test d'acide nucléique et dans lequel le procédé comprend en outre l'encapsulation (216) de la particule suspecte (122) dans une gouttelette avec des réactifs du test d'acide nucléique.

4. Procédé selon la revendication 3, dans lequel ledit procédé comprend en outre la surveillance (218) du générateur de gouttelettes (162) à l'aide d'un système d'imagerie du générateur de gouttelettes (180) afin de surveiller l'encapsulation de la particule suspecte (122) dans la gouttelette.

5. Procédé selon la revendication 3 ou 4, dans lequel ledit procédé comprend en outre le suivi (122) de la gouttelette encapsulant la particule suspecte (122) dans une zone d'amplification du dispositif de test d'acide nucléique (160).

6. Procédé selon une quelconque des revendications précédentes, dans lequel le système d'imagerie (114) est configuré pour imager l'échantillon à l'aide de la lumière d'illumination provenant d'une source lumineuse (116) et pour détecter un motif d'interférence basée sur l'interaction de la lumière incidente avec l'échantillon et la lumière de référence de l'illumination.

7. Procédé selon une quelconque des revendications précédentes, comprenant en outre le suivi (206) de la particule suspecte (122) dans l'échantillon, au sein d'un flux de fluide dirigé vers un dispositif de déviation (150) afin de détourner la particule suspecte (122) de l'échantillon.

8. Procédé selon une quelconque des revendications précédentes, comprenant en outre l'application d'un champ électrique à la particule suspecte (122) dans le flux d'analyse, entre le dispositif de déviation (150) et le dispositif de test d'acide nucléique (160) et le suivi de la particule suspecte (122) dans le flux d'analyse, comprenant l'analyse de l'impact du champ électrique sur un mouvement de la particule suspecte (122) afin de déterminer une caractéristique de la particule suspecte (122).

9. Appareil (100) de surveillance d'un matériau de surveillance d'un procédé, tel qu'un procédé de fabrication, ledit appareil (100) comprenant :
un dispositif d'identification de contaminants (110) configuré pour recevoir un échantillon du matériau de surveillance, dans lequel le dispositif d'identification de contaminants (110) comprend un système d'imagerie (114) comprenant une source lumineuse (116) pour générer une lumière d'éclairage, dans lequel le système d'imagerie (114) est configuré pour détecter un motif d'interférence basé sur l'interaction de la lumière incidente avec l'échantillon et la lumière de référence de l'éclairage et dans lequel le dispositif d'identification de contaminants (110) est configuré pour détecter une particule suspecte (122) dans l'échantillon ;
un dispositif de déviation (150) configuré pour dévier sélectivement la particule suspecte (122) d'un flux de fluide de l'échantillon vers un flux d'analyse ; et
un dispositif de test d'acide nucléique (160) connecté pour recevoir le flux d'analyse, dans lequel le dispositif test d'acide nucléique (160) est configuré pour être activé suite à la détection de la particule suspecte (122) et configuré pour soumettre la particule suspecte (122) à une analyse de test d'acide nucléique.

10. Appareil selon la revendication 9, comprenant en outre un collecteur d'échantillons (102) destiné à fournir l'échantillon au dispositif d'identification des contaminants (110), dans lequel le collecteur d'échantillons (102) est connecté au procédé.

11. Appareil selon la revendication 9 ou 10, dans lequel le dispositif NAT (160) comprend un générateur de gouttelettes (162) configuré pour encapsuler la particule suspecte (122) dans une gouttelette avec des réactifs pour test d'acide nucléique

12. Appareil selon la revendication 11, comprenant en outre un système d'imagerie du générateur de gouttelettes (180) configuré pour surveiller l'encapsulation de la particule suspecte (122) dans la gouttelette.

13. Appareil selon la revendication 11 ou 12, comprenant en outre un système d'imagerie de test d'acide nucléique (170) configuré pour suivre la gouttelette encapsulant la particule suspecte (122).

14. Appareil selon une quelconque des revendications 9 à 13, dans lequel le dispositif d'identification de contaminant (110) est en outre configuré pour suivre la particule suspecte (122) dans un flux de fluide vers le dispositif de déviation (150).

15. Appareil selon la revendication 14, dans lequel le dispositif d'identification de contaminant (110) comprend en outre un dispositif de diélectrophorèse (134) configuré pour soumettre la particule suspecte (122) à un champ électrique dans le flux d'analyse entre le dispositif de déviation (150) et le dispositif de test d'acide nucléique (160), dans lequel l'appareil (100) est en outre configuré pour suivre la particule suspecte (122) afin d'analyser l'impact du champ électrique sur un mouvement de la particule suspecte (122) pour déterminer une caractéristique de la particule suspecte (122).
